# EUROPÄISCHE PATENTSCHRIFT

(11) **EP 0 285 547 B1**
(45) Veröffentlichungstag und Bekanntmachung des Hinweises auf die Patenterteilung: **16.08.1995**
(21) Anmeldenummer: 88730072.1
(22) Anmeldetag: 22.03.1988
(51) Int. Cl.: G02B 25/02, G02B 21/06, G01N 21/88

(54) **Beleuchtungseinrichtung für die Sichtkontrolle von Gegenständen**
Illumination device for visually checking objects
Appareil d'illumination pour vérifier visuellement des objets

(30) Priorität: 31.03.1987 DE 3710762
(43) Veröffentlichungstag der Anmeldung: 05.10.1988
(73) Patentinhaber: Willing, Achim, Dr.-Ing., D-96110 Schesslitz (DE)
(72) Erfinder: Willing, Achim, Dr.-Ing., D-96110 Schesslitz (DE)
(74) Vertreter: Pfenning, Meinig & Partner

(56) Entgegenhaltungen:
- BG-A- 0 784 822
- DE-A- 2 044 533
- DE-B- 1 007 516
- US-A- 1 637 348
- US-A- 3 905 675
- US-A- 3 931 593

## Beschreibung

Die Erfindung betrifft eine Beleuchtungseinrichtung für die Sichtkontrolle von Gegenständen mit einer Lichtquelle nach dem Oberbegriff des Hauptanspruchs.

Für die Sichtkontrolle von Gegenständen ist es vielfach notwendig, die Gegenstände ausreichend zu beleuchten, damit Fehler oder Fehlstellen erkannt werden können. Dabei ist es häufig notwendig, daß die Beleuchtung aus der Richtung erfolgen muß, aus der beobachtet wird. Dies ist beispielsweise für die Inspektion von langgestreckten Hohlräumen, wie Rohre, oder beim Bestücken von Leiterplatten gegeben. Damit aber der Kopf des Beobachters nicht im Strahlengang der Lichtquelle liegt bzw. die Lichtquelle nicht als Hindernis im Beobachtungsweg liegen, werden nach dem Stand der Technik die zu prüfenden Gegenstände schräg beleuchtet. Dies hat aber zur Folge, daß Schatten oder Reflexe auftreten, die das Prüferergebnis verfälschen.

Aus der US-A-1 637 348, der GB-A-784 822, der DE-A-20 44 533 und der DE-A-10 07 515 sind Beleuchtungsstrahlengänge in Mikroskopen bekannt, bei denen gebündeltes Licht in den Beobachtungsstrahlengang mittels eines schräg in dem Strahlengang angeordneten teildurchlässigen Spiegels eingestrahlt wird. Da Beobachtungsstrahlengang und Beleuchtungsstrahlengang die gleiche Richtung haben, werden Gegenstände ohne für den Beobachter sichtbare Schatten ausgeleuchtet und es werden auch Einblicke in Hohlräume möglich. Für die Inspektion größerer Flächen ist jedoch das Mikroskop-Sichtfeld zu klein. Weiterhin treten bei den bekannten Geräten einige prinzipielle Probleme auf. Da der Beleuchtungsstrahlengang durch einen zwischen teildurchlässigem Spiegel und beleuchtetem Gegenstand gelegenem Beobachtungsstrahlengang mit für die Vergrößerung benötigten Grenzflächen von Linsen bzw. Linsensystemen geführt wird, entstehen an diesen Grenzflächen Oberflächenreflexe und Leuchtdichteschleier, die eine Verminderung der Kontraste des beleuchteten Gegenstandes bewirken. Wird als teildurchlässiger Spiegel ein Prisma benutzt, so können störende Reflexe auch an den Grenzflächen des Prismas auftreten. Weiterhin wird das durch den teildurchlässigen Spiegel durchtretende, nicht auf den beleuchteten Gegenstand gelangende Licht auf eine geschwärzte Fläche des Gehäuses gestrahlt, an der es absorbiert werden soll. Selbst bei hochwertiger Schwärzung nimmt eine derartige schwarze Fläche jedoch noch immer eine Leuchtdichte an, die durch Reflexion an dem teildurchlässigen Spiegel wieder in das Auge des Beobachters gelangt und den Sehkontrast des beleuchteten Gegenstandes störend vermindert. Schließlich ist bei all diesen bekannten Lösungen ausschließlich die Beleuchtung mit gerichtetem Licht vorgeschlagen worden, meinstens im Zusammenhang mit Kondensorlinsen.

Ein weiterer Beleuchtungsstrahlengang für Mikroskope ist aus der GB-A-784,822 bekannt. Dabei sind in dem Beleuchtungs- und dem Beobachtungsstrahlengang zwei Prismen vorgesehen, zwischen denen eine polarisierende Schicht angeordnet ist. Das Beleuchtungslicht wird teilweise an der polarisierenden Schicht reflektiert, und das durchgelassene Licht gelangt auf zwei eine "Dachkante" bildende Flächen, die geschwärzt sind, an denen das Licht jeweils zweimal reflektiert und gegebenenfalls absorbiert wird. Auf beide Flächen der "Dachkante" fällt direktes Licht, so daß trotzdem noch störende Reflexionen auftreten können.

Der Erfindung liegt daher die Aufgabe zugrunde, eine Beleuchtungseinrichtung für die Sichtkontrolle von Gegenständen zu schaffen, durch die keine Störungen durch Schatten oder dergleichen auftreten können, die das Prüfungsergebnis verfälschen, wobei eine großflächige Beleuchtung möglich und die Art der Beleuchtung an die Sehaufgabe bzw. die zu prüfenden Gegenstände anpaßbar sein soll und wobei die gute Sichtbarkeit des beleuchteten Gegenstandes nicht durch Reflexe oder Lichtschleier gestört werden soll.

Diese Aufgabe wird erfindungsgemäß durch die kennzeichnenden Merkmale des Hauptanspruches in Verbindung mit den Merkmalen des Oberbegriffes gelöst.

In dem Strahlengang einer Lichtquelle ist bei der erfindungsgemäßen Beleuchtungseinrichtung ein teildurchlässiger Spiegel angeordnet, so daß von der einen Seite des Spiegels der Gegenstand beobachtet werden kann, während die Strahlung einer seitlich vom Beobachter liegenden Lichtquelle an der anderen reflektierenden Oberfläche des Spiegels in die Beobachtungsrichtung gelenkt wird oder umgekehrt. Auf diese Weise wird erreicht, daß hinter dem teildurchlässigen Spiegel die Richtung des Strahlenganges und die Beobachtungsrichtung übereinstimmen, so daß der Gegenstand ohne Verfälschungen betrachtet werden kann. Zwischen teildurchlässigem Spiegel und beleuchtetem Gegenstand bleibt der Raum frei, d.h. es werden weder Optiken noch Schutzgläser angeordnet, damit keine Reflexionen auf Grenzflächen auftreten können.

Weiterhin ist erfindungsgemäß eine Lichtfalle vorgesehen, die je nach Anordnung von Beobachter und Lichtquelle zueinander die nicht auf den Gegenstand gerichtete, durch den Spiegel hindurchtretende oder die an der dem Gegenstand abgewandten Oberfläche des Spiegels reflektierte Reststrahlung absorbiert. Die erfindungsgemäße Lichtfalle besteht aus zwei absorbierenden schwarzen Flächen, deren Wirkung sich multipliziert. Die erste Fläche, auf die die durch den teildurchlässigen Spiegel durchtretende Reststrahlung trifft, soll einerseits Strahlung absorbieren, andererseits kein Licht in den Beobachtungsstrahlengang zurückreflektieren. Dies wird dadurch erreicht, daß diese erste Fläche schwarz ist, jedoch eine gerichtet reflektierende Oberfläche besitzt, die - schräg in den Strahlengang der Reststrahlung gestellt - die noch verbleibende Strahlung auf eine zweite ebenfalls schwarze Fläche richtet. Dadurch multiplizieren sich die Wirkungen beider Flächen, und es wird jegliche Störstrahlung verhindert, die zur Schattenbildung oder dergleichen auf den Gegenständen führen könnte.

Durch die Beleuchtungseinrichtung können auch große Anordnungen zur Sichtkontrolle großflächig einwandfrei beleuchtet werden, wobei aufgrund der Wahl der Lichtquelle, die sowohl einen parallelen Strahlengang als auch eine rein diffuse Abstrahlung aufweisen kann, die Beleuchtungseinrichtung zweckentsprechend, d.h. angepaßt an die zu überprüfenden Gegenstände eingesetzt werden kann. Insbesondere ist die Verwendung der Beleuchtungseinrichtung zur Überprüfung von Bauteilen auf Leiterplatten oder das Bestücken von Leiterplatten, beispielsweise in der SMD-Technik geeignet, da schattenfrei beleuchtet wird und glänzende oder matte Bauteile gleichen Refelxionsgrades gleich bewertet werden, und nicht wie bei gerichteter Strahlung unterschiedlich dunkler bzw. heller wirken. Somit können beispielsweise bei Beobachtung mit einer Kamera oder einem Videoauge und möglicher folgender digitalen Bildverarbeitung Informationsunterschiede aufgrund falscher Beleuchtung auftreten, die mit körperhaften Unterschieden verwechselt werden könnten.

Durch Anordnen einer vergrößernden Optik in den Beobachterstrahlengang vor dem teildurchlässigen Spiegel kann mit der erfindungsgemäßen Beleuchtungseinrichtung sowohl eine einwandfreie Beleuchtung als auch eine einwandfreie Vergrößerung erzielt werden.

Ausführungsbeispiele der Erfindung sind in der Zeichnung dargestellt und werden in der nachfolgenden Beschreibung näher erläutert. Es zeigen:
- Fig. 1: die schematische Darstellung eines Ausführungsbeispiels der Beleuchtungseinrichtung gemäß der Erfindung zur Ausleuchtung und Sichtkontrolle von Rohren,
- Fig. 2: ein Ausführungsbeispiel für eine diffuse Lichtquelle,
- Fig. 3: die Anordnung der erfindungsgemäßen Beleuchtungseinrichtung in einem Gehäuse.

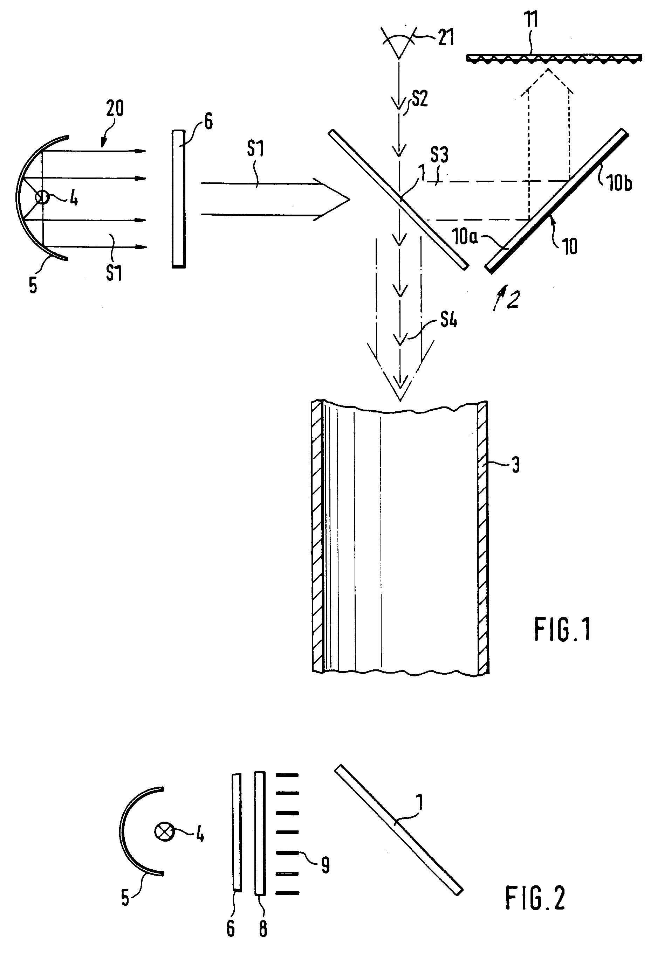

In Fig. 1 ist eine Beleuchtungseinrichtung für die Sichtkontrolle von Rohren dargestellt. Wesentlicher Bestandteil ist ein teildurchlässiger Spiegel 1, der beispielsweise in einem Winkel von etwa 45° von einer Lichtquelle 20, die den Beleuchtungsstrahlengang S1 aufweist, bestrahlt. Die Strahlung wird an dem teildurchlässigen Spiegel 1 um 90° umgelenkt und in ein zu prüfendes Rohr 3 geleitet. Einem Beobachter 21 ist ein Beobachterstrahlengang S2 zugeordnet, der gerade durch den teildurchlässigen Spiegel 1 hindurchgeht, so daß vom Beobachter 21 gesehen hinter dem teildurchlässigen Spiegel 1 der Beobachterstrahlengang S2 und der Beleuchtungsstrahlengang S1 in einem kongruenten Strahlengang S4 übereinstimmen.

Die von der Lichtquelle 20 ausgesandte Stahlung wird nicht vollständig an dem teildurchlässigen Spiegel 1 reflektiert, sondern ein Teil geht direkt durch den Spiegel hindurch,
so daß sich ein Störstrahlengang S3 bildet. Diese Störstrahlung könnte das Sehergebnis beeinflussen, d.h. sich störend auf die Sichtkontrolle auswirken. Daher wird in dem Störstrahlengang S3 eine schematisch dargestellte Lichtfalle 2 angeordnet, die das auftretende Licht absorbiert.

Für die Sichtkontrolle von Hohlräumen, wie die Rohre 3, ist häufig eine stark gebündelte Strahlung notwendig. Daher ist die Lichtquelle 20 in diesem Fall als engbündelnde Lichtquelle ausgebildet, wobei eine Lampe 4 im Brennpunkt eines Parabolreflektors 5 angeordnet ist, so daß die vom Parabolreflektor 5 reflektierte Strahlung parallel ist. Vor dem Parabolreflektor 5 ist eine wärmeabsorbierende oder wärmereflektierende Scheibe 6 aus klarem Material angeordnet. In einem anderen Ausführungsbeispiel kann die parallele Strahlung mittels einer Sammellinse realisiert werden, die von der Lampe 4 bestrahlt wird.

Für die Sichtkontrolle von Bauteilen, die beispielsweise in der SMD-Technik auf Leiterplatten angeordnet sind, oder zum Bestücken von Leiterplatten ist eine schattenfreie großflächige, diffuse Beleuchtung notwendig. Zur Erzeugung der diffusen Beleuchtung kann beispielsweise die Lichtquelle gemäß Fig. 2 verwendet werden, die ebenfalls eine in dem Brennpunkt eines Parabolspiegels 5 angeordnete Lampe 4 und die wärmeabsorbierende oder wärmereflektierende Scheibe 6 aufweist. Hinter die Scheibe 6 ist in den Strahlengang S1 eine Streuscheibe 8 angeordnet, die die gerichtete Strahlung in eine diffuse Strahlung umwandelt. Damit die diffuse Strahlung nicht den Beobachter 21 stört, wird vor die Streuscheibe 8 eine beispielsweise als Lamellengitter 9 ausgebildete Blende gesetzt, deren dem Beobachter 21 zugekehrten Oberflächen (oben) schwarz und deren dem Beobachter abgewandten Oberflächen (unten) weiß oder gut reflektierend sind. Mit dieser Lichtquelle 20 kann großflächig eine völlig diffuse Beleuchtung erzielt werden.

Die Lichtfalle 2 besteht aus einem Restlichtreflektor 10 und einer lichtabsorbierenden Scheibe 11. Der Restlichtreflektor 10 ist mit einer ausschließlich gerichtet reflektierenden glatten Oberfläche versehen und besteht aus einem im Volumen ohne erkennbare Aufstreuung die Strahlung absorbierenden oder aus für die Strahlung durchlässigem Material. Der Restlichtreflektor im Ausführungsbeispiel ist als gerichtet reflektierende und transmittierende Scheibe 10a, die auf ihrer dem Restlichtstrahlengang S3 abgewandten Seite mit einer optisch unmittelbar anliegenden dunklen, vorzugsweise schwarzen Beschichtung 10b versehen ist. Die Restlichtstrahlung wird an dem Restlichtreflektor auf eine lichtabsorbierende Scheibe 11 reflektiert, wobei der Winkel des Reflektors 10 zur Achse des Strahlenganges derart gewählt ist, daß die Reststrahlung einerseits nicht auf den teildurchlässigen Spiegel 1 zurückstrahlt und andererseits auch nicht die Achse Sehobjekt-teildurchlässiger Spiegel 1 - Beobachter 21 streift. Die lichtabsorbierende Scheibe 11 ist beispielsweise ebenfalls als schwarze Fläche ausgebildet.

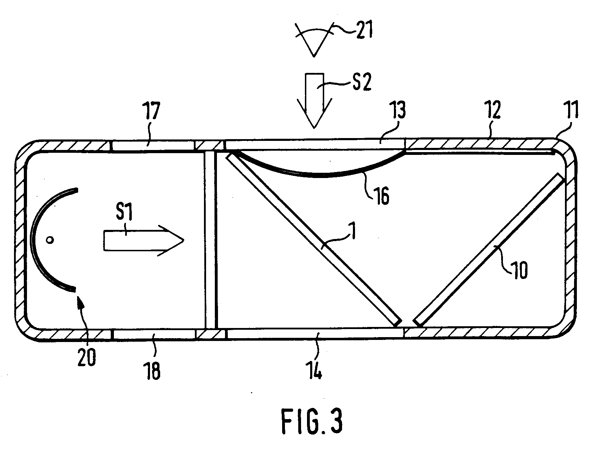

In Fig. 3 ist eine Ansicht der Beleuchtungseinrichtung in einem Gehäuse dargestellt. Das Gehäuse 12 ist mit zwei gegenüberliegenden Öffnungen 13, 14 versehen, wobei die Öffnung 13 dem Beobachter 21 zugewandt ist. Zwischen den Öffnungen 13, 14 ist quer und schräg der teildurchlässige Spiegel angeordnet, und in der Zeichenebene links liegt die Lichtquelle, die durch eine transparente Scheibe 15 abgeschottet werden kann. Rechts ist im schrägen Winkel der die durchtretende Strahlung auf die lichtabsorbierende Fläche 11 lenkende Reflektor 10 vorgesehen. Die Öffnung 13 ist zur Vermeidung von Verschmutzung abgedeckt, wobei die Abdeckung 16 aus einer transparenten Scheibe aber auch, wie in der Fig. 3 angedeutet, aus einer vergrößernden Optik oder einer abbildenden Optik bestehen kann. Auf diese Weise kann der zu betrachtende Gegenstand bei guter Beleuchtung vergrößert werden. Die Öffnung 14 ist nicht abgedeckt, damit keine störenden Reflexionen auftreten können. Neben dem Beobachterstrahlengang können in dem Gehäuse zwei weitere gegenüberliegende abgedeckte Öffnungen 17, 18 vorgesehen sein, deren Mittelachse den Beleuchtungsstrahlengang kreuzt. Auf diese Weise kann der zu prüfende Gegenstand durch Verschwenken des Beobachterauges bei einer anderen Beleuchtung, beispielsweise der Allgemeinbeleuchtung betrachtet werden.

In einem anderen, nicht dargestellten Ausführungsbeispiel kann der Beobachtungsstrahlengang S2 und der Beleuchtungsstrahlengang S1 vertauscht werden, so daß der beleuchtende Strahlengang den teildurchlässigen Spiegel ohne Umlenkung passiert, während der Beobachterstrahlengang durch den teildurchlässigen Spiegel umgelenkt wird, wobei der Beobachter dann der Seite des teildurchlässigen Spiegels gegenüber plaziert ist, die durch die zu absorbierende Reststrahlung, d.h. der an dem teildurchlässigen Spiegel reflektierten Störstrahlung gekennzeichnet ist.

In den Ausführungsbeispielen ist der teildurchlässige Spiegel eine ebene flache Scheibe, er kann aber auch als Prisma oder als anderer nichtebener Spiegel ausgebildet werden, der die auftreffende Strahlung umformt.

Falls eine Lupe oder eine abbildende Optik oder eine Abschlußscheibe in dem zum Beobachter hingewandten Teil des Beobachterstrahlengangs liegt, sollten diese entspiegelt sein.

Anstelle des Beobachters 21 kann auch eine Kamera oder ein Videoauge oder dergleichen angeordnet werden, die den Gegenstand "visuell" erfassen, wobei beispielsweise das Bild der Kamera mittels digitaler Bildverarbeitung weiterverarbeitet werden kann.

Selbstverständlich ist die Ausbildung der Lichtquelle nicht auf die Ausführungen nach Fig. 1 und Fig. 2 beschränkt, es können auch Lichtquellen mit anderer Lichtverteilung gewählt werden; auch können die Lichtquellen Laser sein.

## Patentansprüche

1. Beleuchtungseinrichtung für die Sichtkontrolle von Gegenständen mit einer Lichtquelle, einem quer in dem Strahlengang der Lichtquelle (20) angeordneten, die Strahlung auf den Gegenstand (3) richtenden teildurchlässigen Spiegel (1) und einer Lichtfalle (2,10,11), die derart angeordnet ist, daß sie die nicht auf den Gegenstand (3) gerichtete, durch den teildurchlässigen Spiegel (1) hindurchtretende oder an der dem Gegenstand (3) abgewandten Oberfläche des teildurchlässigen Spiegels (1) reflektierte Reststrahlung absorbiert, wobei ein Beobachterstrahlengang (S2) über die der Lichtquelle (20) abgewandte Seite des teildurchlässigen Spiegels (1) auf den Gegenstand (3) gerichtet ist,
dadurch **gekennzeichnet,**
daß zur Vermeidung von störenden Reflexionen der Strahlengang zwischen teildurchlässigem Spiegel (1) und zu beobachtendem Gegenstand (3) frei von optischen Elementen ist, und
daß die Lichtfalle (2) aus zwei schwarzen Flächen (10, 11) besteht, von denen die als erste von der durch den teildurchlässigen Spiegel (1) tretenden Reststrahlung (S3) getroffene Fläche (10) eine glatte, die Strahlung gerichtet reflektierende Oberfläche besitzt und schräg in den Strahlengang der durch den teildurchlässigen Spiegel (1) tretenden Strahlung (S3) gestellt ist und das von ihr nicht absorbierte Restlicht auf die zweite schwarze Fläche (11) lenkt.

2. Beleuchtungseinrichtung nach Anspruch 1, dadurch gekennzeichnet, daß die erste schwarze Fläche (10) der Lichtfalle als Oberflächenspiegel ausgebildet ist, der aus einer transparenten Scheibe (10a) mit auf der dem teildurchlässigen Spiegel (1) zugewandten Seite glatter, gerichtet reflektierender Oberfläche besteht, deren Rückseite (10b) mit einer schwarzen Beschichtung versehen ist.

3. Beleuchtungseinrichtung nach Anspruch 1 oder 2, dadurch gekennzeichnet, daß in dem Beobachterstrahlengang (S2) vor dem teildurchlässigen Spiegel (1) eine vergrößernde und/oder abbildende Optik (16) angeordnet ist.

4. Beleuchtungseinrichtung nach einem der Ansprüche 1 bis 3, dadurch gekennzeichnet, daß die Lichtquelle (20) derart ausgebildet ist, daß sie eine eng gebündelte parallele Strahlung abgibt.

5. Beleuchtungseinrichtung nach einem der Ansprüche 1 bis 3, dadurch gekennzeichnet, daß die Lichtquelle derart ausgebildet ist, daß sie eine diffuse Strahlung abgibt.

6. Beleuchtungseinrichtung nach Anspruch 5, dadurch gekennzeichnet, daß vor der diffus strahlenden Lichtquelle eine Blende (9) zur Abschirmung gegen direkte Einsicht angeordnet ist.

7. Beleuchtungseinrichtung nach einem der Ansprüche 1 bis 6, dadurch gekennzeichnet, daß Lichtquelle (20), teildurchlässiger Spiegel (1) und Lichtfalle (2,10,11) in einem Gehäuse (12) mit zwei sich gegenüberliegenden Öffnungen (13,14) angeordnet sind, zwischen denen schräg der teildurchlässige Spiegel (1) liegt, wobei die dem Gegenstand zugewandte Öffnung (14) offen ist und die dieser Öffnung (14) gegenüberliegende Öffnung (13) durch eine transparente, vorzugsweise entspiegelte Scheibe oder die vergrößernde oder abbildende Optik (16) abgedeckt ist.

8. Beleuchtungseinrichtung nach Anspruch 7, dadurch gekennzeichnet, daß neben dem durch die Öffnungen (13,14) definierten Beobachterstrahlengang ein weiterer Beobachterstrahlengang angeordnet ist, der durch zwei sich gegenüberliegende Öffnungen (17,18) gebildet ist, wobei die Mittelachse der Öffnungen (17,18) den Beleuchtungsstrahlengang kreuzen.

9. Verwendung einer Beleuchtungseinrichtung nach einem der Ansprüche 1 bis 3, oder 5 bis 8 für die Prüfung von auf Leiterplatten angeordneten Bauteilen mit einer Kamera oder einem Videoauge oder dergleichen als Beobachter, wobei die Bildinformationen digital verarbeitet werden.

## Claims

1. Illumination device for visual checking of objects with a light source, a partially reflecting mirror (1) arranged transversely in the optical path of the light source (20) directing the radiation onto the object (3) and with a light trap (2, 10, 11) arranged in such a way that it absorbs the residual radiation, which is not directed onto the object (3), passes through the partially reflecting mirror (1) or is reflected on the surface of the partially reflecting mirror (1) averted from the object (3), wherein an observation optical path (S2) is directed onto the object (3) via the side of the partially reflecting mirror (1) averted from the light source (20), characterised in that to avoid disturbing reflections the optical path is free from optical elements between the partially reflecting mirror (1) and the object (3) to be observed, and that the light trap (2) comprises two black surfaces (10, 11), of which the surface (10) first struck by the residual radiation (S3) passing through the partially reflecting mirror (1) has the surface directionally reflecting the radiation and is positioned obliquely in the optical path of the radiation (S3) passing through the partially reflecting mirror (1) and directs the residual light not absorbed by it onto the second black surface (11).

2. Illumination device according to Claim 1,
characterised in that the first black surface (10) of the light trap is constructed as a front-surface mirror, which consists of a transparent disc (10a) with a smooth, directionally reflecting surface on the side facing the partially reflecting mirror (1), its rear side (10b) being provided with a black coating.

3. Illumination device according to Claim 1 or 2,
characterised in that a magnifying and/or image-forming optical unit (16) is arranged in the observation optical path (S2) in front of the partially reflecting mirror (1).

4. Illumination device according to one of Claims 1 to 3,
characterised in that the light source (20) is constructed so that it emits a closely bundled, parallel radiation.

5. Illumination device according to one of Claims 1 to 3,
characterised in that the light source is constructed so that it emits a diffuse radiation.

6. Illumination device according to Claim 5,
characterised in that a shutter (9) is arranged in front of the light source radiating diffuse light to shield against direct insight.

7. Illumination device according to one of Claims 1 to 6,
characterised in that the light source (20), partially reflecting mirror (1) and light trap (2, 10, 11) are arranged in a housing (12) with two opposing openings (13, 14), between which the partially reflecting mirror (1) lies obliquely, in which case the opening (14) facing the object is open and the opening (13) located opposite this opening (14) is covered by a transparent, preferably anti-reflective, disc or by the magnifying or image-forming optical unit (16).

8. Illumination device according to Claim 7, characterised in that next to the observation optical path defined by the openings (13, 14), a further observation optical path is arranged, which is formed by two opposing openings (17, 18), the central axis of said openings (17, 18) intersecting the observation optical path.

9. Application of an illumination device according to one of Claims 1 to 3 or 5 to 8 for the examination of structural parts arranged on conductor plates with a camera or a video eye or similar as observer, in which case the image data are processed digitally.

## Revendications

1. Dispositif d'éclairage pour le contrôle visuel d'objets, comportant une source lumineuse, un miroir (1) transparent, disposé transversalement sur le trajet des rayons de ladite source lumineuse (20) et dirigeant le rayonnement sur l'objet (3), ainsi qu'un piège à lumière (2, 10, 11) qui est disposé de telle sorte qu'il absorbe le rayonnement résiduel non dirigé sur l'objet (3), et qui traverse le miroir (1) ou se réfléchit sur la surface dudit miroir non-orientée vers l'objet (3), un trajet de rayons témoin (S2) étant dirigé sur l'objet (3) à travers la surface du miroir (1) non-orientée vers la source lumineuse (20), caractérisé en ce que pour éviter des réflexions parasites, le trajet des rayons est dépourvu de tous éléments optiques entre le miroir (1) et l'objet à observer (3), et en ce que le piège à lumière (2) est constitué de deux surfaces noires (10, 11) dont la première surface (10), frappée par le rayonnement résiduel (S3) traversant le miroir partiellement transparent (1), présente une superficie lisse réfléchissante orientée vers le rayonnement, est située obliquement dans le trajet des rayons du rayonnement (S3) qui traversent le miroir (1) et dirige la lumière résiduelle qu'elle n'a pas absorbée sur la deuxième surface noire (11).

2. Dispositif d'éclairage selon la revendication 1, caractérisé en ce que la première surface noire (10) du piège à lumière est réalisée sous la forme d'un miroir superficiel qui est constitué d'un disque transparent (10a) comportant sur son côté orienté vers le miroir partiellement transparent (1) une surface réfléchissante lisse, une enduction noire étant appliquée sur le côté arrière (10b) dudit disque transparent (10a).

3. Dispositif d'éclairage selon la revendication 1 ou 2, caractérisé en ce que, dans le trajet des rayons témoins (S2) est disposé, en amont du miroir partiellement transparent (1), un système optique (16) agrandisseur et/ou reproducteur.

4. Dispositif d'éclairage selon l'une des revendications 1 à 3, caractérisé en ce que la source lumineuse (20) est réalisée de telle sorte qu'elle émet un rayonnement parallèle à focalisation serrée.

5. Dispositif d'éclairage selon l'une des revendications 1 à 3, caractérisé en ce que la source lumineuse est réalisée de telle sorte qu'elle émet un rayonnement diffus.

6. Dispositif d'éclairage selon la revendication 5, caractérisé en ce que, en amont de la source lumineuse à rayonnement diffus, est disposé un diaphragme (9) protégeant la source lumineuse de toute observation directe.

7. Dispositif d'éclairage selon l'une des revendications 1 à 6, caractérisé en ce que la source lumineuse (20), le miroir partiellement transparent (1) et le piège à lumière (2, 10, 11) sont disposés dans un carter (12) comportant deux ouvertures (13, 14) qui se font face mutuellement et entre lesquelles le miroir partiellement transparent (1) est placé obliquement, tandis que l'ouverture (14) orientée vers l'objet est ouverte et l'ouverture (13) faisant face à cette ouverture (14), est recouverte par un disque transparent, de préférence non réfléchissant ou par le système optique (16) agrandisseur ou reproducteur.

8. Dispositif d'éclairage selon la revendication 7, caractérisé en ce que, à côté du trajet des rayons témoin défini par les ouvertures (13, 14) est disposé un autre trajet de rayons témoin lequel est formé par deux ouvertures (17, 18) se faisant face mutuellement, l'axe médian desdites ouvertures (17, 18) croisant le trajet des rayons d'éclairage.

9. Utilisation d'un dispositif d'éclairage selon l'une des revendications 1 à 3 ou 5 à 8, pour le contrôle de composants disposés sur des plaquettes de circuits, comportant un appareil photo ou une caméra vidéo ou un appareil analogue servant d'observateur, les images obtenues subissant un traitement numérique.
